# EUROPÄISCHE PATENTSCHRIFT

(11) **EP 0 531 380 B1**
(45) Veröffentlichungstag und Bekanntmachung des Hinweises auf die Patenterteilung: **14.09.1994**
(21) Anmeldenummer: 91910067.7
(22) Anmeldetag: 28.05.1991
(51) Int. Cl.: G02B 7/182, B23K 26/02

(54) **UMLENKSPIEGELGEHÄUSE FÜR LASERMATERIALBEARBEITUNGSSYSTEME UND STRAHLWEICHE**
REVERSING MIRROR HOUSING FOR LASER MATERIAL-MACHINING SYSTEMS AND BEAM-SEPARATING FILTER
LOGEMENT DE MIROIR DE DEVIATION POUR SYSTEMES D'USINAGE DE MATERIAUX AU LASER ET FILTRE SEPARATEUR DU FAISCEAU

(30) Priorität: 28.05.1990 DE 4017152
(43) Veröffentlichungstag der Anmeldung: 17.03.1993
(73) Patentinhaber: KARL H. ARNOLD MASCHINENFABRIK GMBH & CO. KG, D-88214 Ravensburg (DE)
(72) Erfinder: GNANN, Rüdiger, A., D-7980 Ravensburg (DE)
(74) Vertreter: Lehn, Werner, Dipl.-Ing.
(86) Internationale Anmeldenummer: EP9100983
(87) Internationale Veröffentlichungsnummer: WO9119217

(56) Entgegenhaltungen:
- EP-A- 0 159 723
- WO-A-90/02627
- DE-C- 976 222
- US-A- 4 422 725
- PATENT ABSTRACTS OF JAPAN, vol. 11, no. 210, (M-604) (2657), 8 July 1987 ; & JP-A-6228094
- PATENT ABSTRACTS OF JAPAN, vol. 13, no. 526, (M-897)(3874), 22 November 1989 ; & JP-A-1215487

## Beschreibung

Die Erfindung bezieht sich auf ein Umlenkspiegelgehäuse mit einem Umlenkspiegel für Lasermaterialbearbeitungssysteme, mit einem als Kugelkalotte ausgebildeten Gehäuseunterteil, wobei das Zentrum der Kugelkalotte in der Spiegelebene liegt, und mit einem den Umlenkspiegel tragenden Gehäuseoberteil mit einer der Kugelkalotte entsprechenden Lagerungsfläche, bei dem der Umlenkspiegel durch Verschwenken des Gehäuseoberteils gegenüber dem Gehäuseunterteil in der Kugelkalotte justierbar ist, und auf eine Strahlweiche mit einem solchen Umlenkspiegelgehäuse.

Ein derartiges Umlenkspiegelgehäuse ist aus der WO-A-90/02627 bekannt.

Weiter ist aus der JP-A-62-28094 ein einteiliges Umlenkspiegelgehäuse mit Eintritts- und Austrittsöffnungen und mit einem Umlenkspiegel bekannt, der von außerhalb des Gehäuses ohne Veränderung seiner Justierung entnehmbar angeordnet ist.

Bei bekannten Umlenksystemen für den Laserstrahl in Lasermaterialbearbeitungssystemen sind die Umlenkspiegel in Platten, die in der (um 45° geneigten) Spiegelebene liegen, in Fassungen verschraubt, und diese werden in Membranen oder Kugelpfannen mittels Justierschrauben gegenüber dem Gehäuse des Umlenkspiegels verschoben. Der Spiegel ist also immer in eine justierbare Halterung eingeschraubt und mit dieser am Gehäuse befestigt. Wenn ein Spiegel ersetzt werden muß, macht dies immer eine Neujustierung des Strahlenganges erforderlich.

Bei den bekannten Systemen wird immer mit in der Spiegelebene vorgesehenen Verstelleinrichtungen gearbeitet, wobei beim Einsatz von Kugelpfannen das Zentrum der Schwenkachse außerhalb der Strahlachse und damit das Drehzentrum nie in der Spiegelebene liegt. Bei Membranjustierungen ist die Strahlachse durch Justierung schlecht kontrollierbar und kann sich darüber hinaus verschieben.

Es ist weiter bekannt, daß die Umlenkspiegel auf Platten befestigt werden, die ihrerseits auf Stellschrauben im Gehäuse gelagert sind.

Durch die DE 23 63 765 Al ist schließlich ein Lager für einen schwenkbaren Spiegel bekannt, bei dem der Spiegel derart auf der Kreisfläche eines Kugelabschnittes angeordnet ist, daß das Zentrum der Kugel auf der Spiegeloberfläche liegt. Der Kugelabschnitt ist in einer Kugelkalotte entprechenden Durchmessers gelagert. Der Spiegel ist mittels einer an der lagernden Kugelkalotte angebrachte, in einer zur Nullstellung des Spiegels parallelen Ebene wirksamen Verstelleinrichtung bewegbar. Eine solche Kugelkalottenanordnung bringt praktisch keinen Vorteil gegenüber einer Spiegelmembranaufhängung. Insbesondere haben hier Spiegeldicke und Planheit ihren Einfluß auf die Justierung, das Zentrum muß bei einem Wechsel von Bauteilen in der Justiermechanik neu gefunden werden, ein Winkelfehler ist bei zwei Einstellmöglichkeiten unvermeidbar, der mechanische Aufwand ist sehr hoch und die Justierung erfordert geübtes Personal und ein Wechsel des Spiegels erfordert umfangreiche Nachjustierungen.

Der Erfindung liegt die Aufgabe zugrunde, ein Umlenkspiegelgehäuse für Lasermaterialbearbeitungssysteme zu schaffen, das geometrisch und konstruktiv so aufgebaut ist, daß die Spiegelebene in und gegenüber dem Gehäuse festgelegt ist und somit nur das Gehäuse die Strahlgeometrie bestimmt, so daß ein Spiegelwechsel ohne Veränderung der Justiergeometrie möglich ist.

Dabei sollte das Gehäuse so ausgelegt sein, daß eine Deformation des Spiegels, welche die Fokussierbarkeit des Laserstrahls beeinträchtigen würde, sicher vermieden wird. Weiter sollte sich die Spiegelebene durch die Justierung nicht aus der Achse parallel liegend verschieben, wodurch der Rohstrahl nicht mehr zentrisch in die Fokussieroptik eintreten würde.

Die Aufgabe der Erfindung wird mit einem Umlenkspiegelgehäuse der eingangs beschriebenen Art erfindungsgemäß dadurch gelöst,
- daß sich die Kugelkalottenlagerung der Gehäuseteile in einem Bereich vor der Fläche des Umlenkspiegels befindet,
- daß die beiden Gehäuseteile im Bereich der Kugelkalottenlagerung mit einander gegenüberliegenden Öffnungen für den Laserstrahl versehen sind, und
- daß der Umlenkspiegel von außerhalb des Gehäuses leicht zugänglich in der Spiegelebene paßgerecht in das Gehäuseoberteil (2) eingelegt und gehalten ist.

Wesentlich ist dabei, daß der Mittelpunkt oder das Drehzentrum der Kugelkalotte des Gehäuseunterteils genau in der Spiegelebene liegt, und daß die Justierebene ausschließlich durch das Spiegelgehäuse selbst erzeugt wird.

Die Lage des Umlenkspiegels ist gegenüber dem Gehäuseoberteil durch Spiegelauflageflächen für die Spiegeloberfläche in dem Gehäuseoberteil festgelegt. Damit ist ein Spiegelwechsel, der in regelmäßigen Intervallen zu Reinigungszwecken erforderlich ist, möglich, ohne daß sich die Justiergeometrie verändert, da die Geometrie durch die Spiegelauflagefläche im Gehäuse festgelegt ist bzw. durch das Gehäuse selbst gebildet wird. Die Spiegelentnahme aus dem Gehäuse ist sehr einfach, da der Spiegel nur eingelegt ist.

Bei der Justierung ist der Spiegel nie gegenüber dem Gehäuseoberteil zu bewegen.

Durch die Festlegung der Spiegeloberfläche in dem Gehäuseoberteil ist eine exakte Planparallelität der Spiegelrückseite für eine genaue Justage nicht erforderlich. Die geometrischen Anforderungen an den Spiegel beschränken sich nur auf die Spiegeloberfläche, d.h. die optische Seite, und ein genauer Durchmesser sowie Dicke, Planparallelität usw. haben keine Bedeutung.

Vorteilhaft sind zwischen dem Gehäuseoberteil und dem Gehäuseunterteil je zwei Justierschrauben in und quer zur Strahlachsenrichtung des Laserstrahls vorgesehen, mit welchen das Gehäuseoberteil auf dem Gehäuseunterteil um das in der Spiegelebene liegende Kugelzentrum geschwenkt werden kann. Eine derart übersichtliche Anordnung der Justierebene und die fertigungstechnisch klar erkennbare und meßbare Geometrie bringt Vorteile bei der Herstellung (zwei Basisteile) und bei der industriellen Handhabung. Die erforderliche Justiergenauigkeit von kleiner oder gleich 0,001 rad ist auch mit ungeübtem Personal ohne weiteres erreichbar.

Zweckmäßig sind die Halterungen des Umlenkspiegels und gegebenenfalls eine Kühlplatte auf dessen Rückseite derart ausgebildet, daß nur geringe und zur Spiegelebene parallele Kräfte auftreten können, wodurch eine Deformation der Spiegeloberfläche vermieden wird.

Vorteilhaft ist auf der Rückseite des Umlenkspiegels eine Kühlplatte lösbar angebracht oder eine Flüssigkeitsdirektkühlung vorgesehen. Die Flüssigkeitsdirektkühlung von hinten ist möglich, weil die Rückseite des Spiegels freiliegen kann, wodurch auch eine hydraulische Spiegelvorspannung ermöglicht wird.

Vorteilhaft sind in die Kühlplatte elektrische Signalgeber für Sicherheitsfunktionen wie Thermofühler integriert, wobei der Spiegel beispielsweise auf konstante Temperatur von 20° + 1° C überwacht werden kann.

Vorteilhaft bei dem erfindungsgemäßen Umlenkspiegelgehäuse ist außerdem, daß die Justierschrauben zur Einstellung der optischen Achse in einer Ebene liegen, die parallel zur eintretenden oder austretenden Strahlachse angeordnet ist, wodurch die Zuordnung der Justiererfordernisse direkt erkennbar ist. Schließlich ist die geometrische Anordnung für beliebige Umlenkwinkel anwendbar, wobei auch besonders an horizontale Umlenkung gedacht ist.

Bei der Herstellung von kleinen Werkstücken durch Laserschweißen wird im Wechsel an wenigstens zwei Stationen gearbeitet. Dabei wird der Laserstrahl immer zwischen den beiden Stationen umgeschaltet, wobei an der nichtarbeitenden Station in der Ruhezeit ein Teilewechsel mittels eines Drehtellers erfolgt. Für die Umschaltung ist eine Strahlweiche erforderlich, mit der die Umschaltung in einer möglichst geringen Zeit erfolgen sollte. Bei bekannten Verfahren wird der mechanische Verschluß an der Laserstrahlquelle geschlossen, ein Spiegelgehäuse verschoben und der Verschluß wieder geöffnet. Bekannte Laserstrahlquellenverschlüsse arbeiten hier mit einer Taktzeit von etwa 0,3 bis 0,4 sec zu langsam, wenn Schweißhaupttaktzeiten von 1 bis 2 sec vorliegen. Außerdem halten mechanische Verschlüsse selten mehr als 1 bis 2 Millionen Schaltungen bis zum Verschleiß aus. Für eine schnelle Strahlweiche ist daher dieses bekannte System nicht geeignet.

Daher besteht eine Weiterbildung der Erfindung in einer Strahlweiche für Lasermaterialbearbeitungssysteme mit einem erfindungsgemäß ausgebildeten Umlenkspiegelgehäuse, bei der eine Seite des Umlenkspiegels freiliegend in dem Gehäuseoberteil angeordnet ist, die Laserstrahleintrittsöffnung im Gehäuseoberteil in Richtung über den freiliegenden Spiegelrand hinaus vergrößert ist, und das Umlenkspiegelgehäuse in Richtung der Vergrößerung der Laserstrahleintrittsöffnung und zurück verschiebbar ausgebildet ist. Der Umlenkspiegel ist dabei zweckmäßig unsymmetrisch im Gehäuseoberteil angeordnet.

Bei einer derartigen Strahlweiche kann der Rohstrahl je nach Strahldurchmesser außermittig auf den Spiegel geleitet werden, während nach Umschaltung auf Durchlaß mit optimiertem Schiebeweg durch Verschiebung des Umlenkspiegelgehäuses auf Führungen mit einem Zylinder oder Spindelantrieb der Strahl unbeeinflußt durch das Umlenkspiegelgehäuse leitbar ist. Die mechanische Steifheit und Formstabilität des Gehäuses ist sichergestellt.

Vorteilhaft ist auf der Laserstrahleintrittsseite eine vorgelagerte, der Strahlgeometrie und dem freiliegenden Spiegelrand angepaßte flüssigkeitsgekühlte Prallplattenblende thermisch isoliert am Gehäuseoberteil befestigt. Damit kann die Strahlweiche bei geöffnetem Laserquellenverschluß umgeschaltet werden, ohne daß sich das Umlenkspiegelgehäuse durch Streustrahlung infolge von Reflexion an der Spiegelkante aufheizt und dadurch maßlich verändert.

Zweckmäßig ist der Hub der Gehäuseverschiebung etwa 10 mm größer als der Rohstrahldurchmesser, womit sich bei einem Rohstrahldurchmesser von 45 mm Umschaltzeiten von 0,2 sec erzielen lassen, das Gehäuse also innerhalb etwa 0,2 sec von einer Endstellung in die andere Endstellung verschiebbar ist.

Dies ist besonders vorteilhaft bei kurzen Schweißzyklen mit Maschinen mit zwei oder mehr Stationen, weil sich hierdurch die effektive Nutzungszeit der Lasermaterialbearbeitungsanlage wesentlich erhöht.

Vorteilhaft ist weiter bei der erfindungsgemäßen Strahlweiche, daß sich durch die Verschiebegeschwindigkeit bei offenem Strahlquellenverschluß ein weiches Aus- und Einkoppeln des Strahls aus dem bzw. in das Werkstück realisieren läßt, weil bei der Umschaltung mit offenem Laserquellenverschluß während der Verschiebung die Strahlenenergie an zwei Werkstücken geteilt auftrifft, am ersten Werkstück abnimmt und am zweiten Werkstück zunimmt. Durch das sanfte Auskoppeln des Laserstrahls am ersten Werkstück kann beim Laserstrahlschweißen die Kraterbildung am Schweißnahtende verhindert und somit eine Qualitätsverbesserung erzielt werden.

Schließlich hat das erfindungsgemäße Umlenkspiegelgehäuse den Vorteil, daß sich zum Beispiel Kupferumlenkspiegel, die durch Gebrauch an der Oberfläche Abnutzungserscheinungen wie Einbrände und Formfehler in Form von beispielsweise Kratzern aufweisen, nacharbeiten lassen, da die Spiegeldicke keinen Einfluß auf die Justiergenauigkeit hat.

Die Erfindung ist im folgenden an Ausführungsbeispielen und anhand der Zeichnungen näher erläutert. In den Zeichnungen zeigen
- Fig. 1: eine Seitenschnittansicht eines erfindungsgemäßen Umlenkspiegelgehäuses,
- Fig. 2: eine Draufsicht auf das Umlenkspiegelgehäuse nach Fig. 1,
- Fig. 3: eine Seitenschnittansicht einer erfindungsgemäßen Strahlweiche,
- Fig. 4: eine Vorderansicht der Strahlweiche nach Fig. 3, und
- Fig. 5: eine Draufsicht auf die Strahlweiche nach Fig. 3.

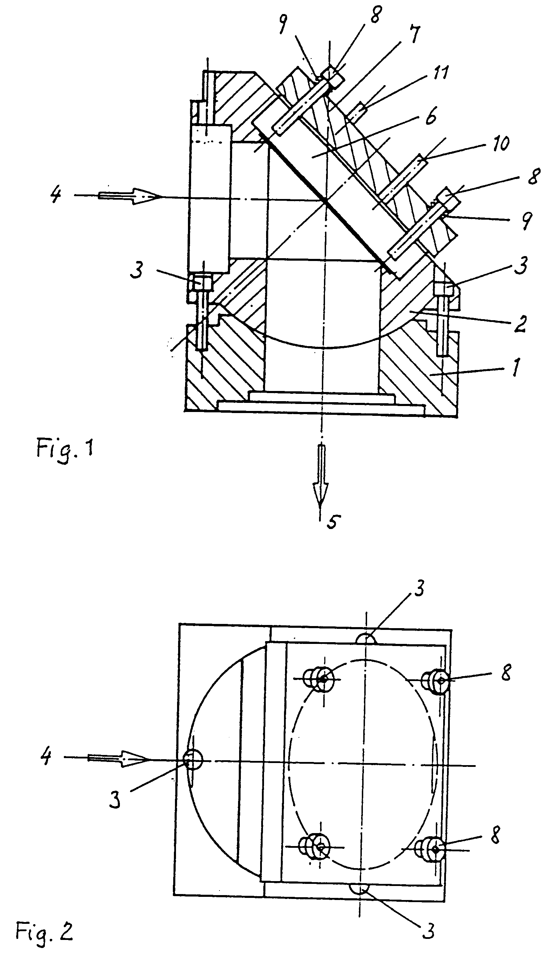

Das in Fig. 1 und 2 dargestellte erfindungsgemäße Umlenkspiegelgehäuse weist ein als Kugelkalotte ausgebildetes Gehäuseunterteil 1 und ein hierauf in der Kugelkalotte schwenkbar angeordnetes Gehäuseoberteil 2 auf. Zwischen dem Gehäuseoberteil 2 und dem Gehäuseunterteil 1 sind je zwei Justierschrauben 3 in und quer zur Strahlachsenrichtung des Laserstrahls vorgesehen. Der Laserstrahl tritt in Richtung des Pfeiles 4 in das Umlenkspiegelgehäuse ein und in Richtung des Pfeiles 5 aus diesem aus.

Ein Umlenkspiegel 6 ist von außen leicht zugänglich in das Gehäuseoberteil 2 paßgerecht eingelegt und gehalten. Auf der Rückseite des Umlenkspiegels 6 ist eine Kühlplatte 7 mittels Schrauben 8 und Andrückfedern 9 lösbar angebracht.

In die Kühlplatte 7 ist ein Thermofühler 10 integriert, während mit 11 ein Anschluß für Wasserkühlung bezeichnet ist.

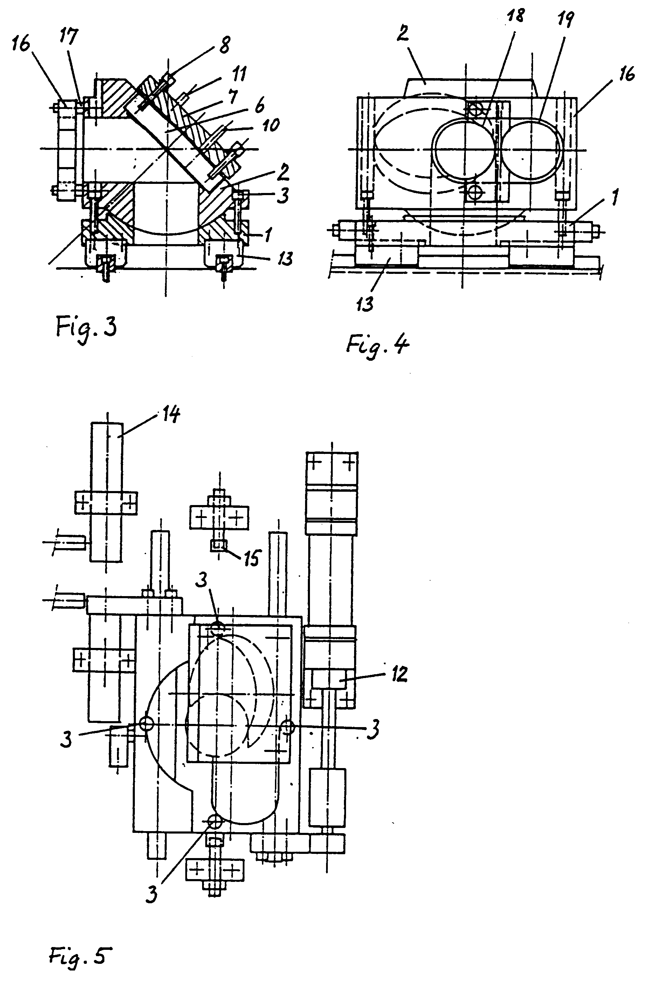

In Fig. 3 bis 5 ist eine erfindungsgemäße Strahlweiche mit einem Umlenkspiegelgehäuse dargestellt, bei dem entsprechende Elemente mit den gleichen Bezugzszeichen wie in Fig. 1 und 2 bezeichnet sind. Hier ist eine Seite des Umlenkspiegels freiliegend in dem Gehäuseoberteil 2 angeordnet, und die Laserstrahleintrittsöffnung im Gehäuseoberteil 2 ist in Richtung über den freiliegenden Spiegelrand hinaus vergrößert. Das Umlenkspiegelgehäuse ist mittels eines Verschiebezylinders 12 und Führungen 13 in Richtung der Vergrößerung der Laserstrahleintrittsöffnung gegen einen Stoßdämpfer 14 und einen Festanschlag 15 und zurück verschiebbar ausgebildet.

Auf der Laserstrahleintrittsseite ist eine vorgelagerte, der Strahlgeometrie und dem freiliegenden Spiegelrand angepaßte flüssigkeitsgekühlte Prallplattenblende 16 über einen Isolator 17 thermisch isoliert an dem Gehäuseoberteil 2 befestigt. Die vergrößerte Öffnung der Prallplattenblende 16 ist in Fig. 4 deutlich zu erkennen.

Der Umlenkspiegel ist hier unsymmetrisch im Gehäuseoberteil 2 angeordnet. In Fig. 4 ist weiter mit 18 der Umriss des eintretenden Rohstrahls in Umlenkposition und mit 19 der Umriss des eintretenden Rohstrahls in Durchlaßposition des Umlenkspiegelgehäuses bezeichnet.

## Patentansprüche

1. Umlenkspiegelgehäuse mit einem Umlenkspiegel (6) für Lasermaterialbearbeitungssysteme,
- mit einem als Kugelkalotte ausgebildeten Gehäuseunterteil (1), wobei das Zentrum der Kugelkalotte in der Spiegelebene liegt,
- und mit einem den Umlenkspiegel (6) tragenden Gehäuseoberteil (2) mit einer der Kugelkalotte entsprechenden Lagerungsfläche,
- bei dem der Umlenkspiegel (6) durch Verschwenken des Gehäuseoberteils (2) gegenüber dem Gehäuseunterteil (1) in der Kugelkalotte justierbar ist,
dadurch **gekennzeichnet**,
- daß sich die Kugelkalottenlagerung der Gehäuseteile (1, 2) in einem Bereich vor der Fläche des Umlenkspiegels (6) befindet,
- daß die beiden Gehäuseteile (1, 2) im Bereich der Kugelkalottenlagerung mit einander gegenüberliegenden Öffnungen für den Laserstrahl versehen sind, und
- daß der Umlenkspiegel von außerhalb des Gehäuses leicht zugänglich in der Spiegelebene paßgerecht in das Gehäuseoberteil (2) eingelegt und gehalten ist.

2. Vorrichtung nach Anspruch 1,
dadurch **gekennzeichnet**, daß zwischen dem Gehäuseoberteil (2) und dem Gehäuseunterteil (1) je zwei Justierschrauben (3) in und quer zur Strahlachsenrichtung des Laserstrahls vorgesehen sind.

3. Vorrichtung nach einem der vorhergehenden Ansprüche,
dadurch **gekennzeichnet**, daß die Lage des Umlenkspiegels (6) gegenüber dem Gehäuseoberteil (2) durch Spiegelauflageflächen für die Spiegeloberfläche in dem Gehäuseoberteil (2) festgelegt ist.

4. Vorrichtung nach einem der vorhergehenden Ansprüche,
dadurch **gekennzeichnet**, daß die Halterung des Umlenkspiegels (6) und einer Kühlplatte (7) auf dessen Rückseite derart ausgebildet sind, daß nur geringe und zur Spiegelebene parallele Kräfte auftreten können.

5. Vorrichtung nach einem der vorhergehenden Ansprüche,
dadurch **gekennzeichnet**, daß auf der Rückseite des Umlenkspiegels (6) eine Kühlplatte (7) lösbar angebracht oder eine Flüssigkeitsdirektkühlung vorgesehen ist.

6. Vorrichtung nach Anspruch 4 oder 5,
dadurch **gekennzeichnet**, daß in die Kühlplatte (7) elektrische Signalgeber für Sicherheitsfunktionen wie Thermofühler (10) integriert sind.

7. Strahlweiche für Lasermaterialbearbeitungssysteme mit einem Umlenkspiegelgehäuse nach einem der vorhergehenden Ansprüche,
dadurch **gekennzeichnet**,
- daß eine Seite des Umlenkspiegels (6) freiliegend in dem Gehäuseoberteil (2) angeordnet ist,
- daß die Laserstrahleintrittsöffnung im Gehäuseoberteil (2) in Richtung über den freiliegenden Spiegelrand hinaus vergrößert ist, und
- daß das Umlenkspiegelgehäuse in Richtung der Vergrößerung der Laserstrahleintrittsöffnung und zurück verschiebbar ausgebildet ist.

8. Strahlweiche nach Anspruch 7,
dadurch **gekennzeichnet**, daß der Umlenkspiegel (6) unsymmetrisch im Gehäuseoberteil (2) angeordnet ist.

9. Strahlweiche nach Anspruch 7 oder 8,
dadurch **gekennzeichnet**, daß auf der Laserstrahleintrittsseite eine vorgelagerte, der Strahlgemoemtrie und dem freiliegenden Spiegelrand angepaßte flüssigkeitsgekühlte Prallplattenblende (16) thermisch isoliert am Gehäuseoberteil (2) befestigt ist.

10. Strahlweiche nach einem der Ansprüche 7 bis 9,
dadurch **gekennzeichnet**, daß der Hub der Gehäuseverschiebung etwa 10 mm größer als der Rohstrahldurchmesser ist.

11. Strahlweiche nach einem der Ansprüche 7 bis 10,
dadurch **gekennzeichnet**, daß das Gehäuse innerhalb etwa 0,2 sec von einer Endstellung in die andere Endstellung verschiebbar ist.

## Claims

1. Deviation mirror housing with a deviation mirror (6) for laser material working systems,
- with a lower housing portion (1) constructed as a spherical cup, the centre of the spherical cup being located in the plane of the mirror,
- and with an upper housing portion (2) carrying the deviation mirror (6), with a bearing surface corresponding to the spherical cup,
- in which the deviation mirror (6) can be adjusted in the spherical cup by pivoting the upper housing portion (2) relative to the lower housing portion (1),
characterised
- in that the spherical cup mounting of the housing portions (1, 2) is located in a region in front of the surface of the deviation mirror (6),
- in that the two housing portions (1, 2) in the region of the spherical cup mounting are provided with mutually opposed openings for the laser beam, and
- in that the deviation mirror is inserted and held in the upper housing portion (2) in mating relationship in the plane of the mirror so as to allow easy access from outside the housing.

2. Apparatus according to claim 1, characterised in that between the upper housing portion (2) and the lower housing portion (1) are provided in each case two adjusting screws (3) in and transversely to the beam axis direction of the laser beam.

3. Apparatus according to either of the preceding claims, characterised in that the position of the deviation mirror (6) is fixed relative to the upper housing portion (2) by mirror supporting surfaces for the mirror surface in the upper housing portion (2).

4. Apparatus according to any of the preceding claims, characterised in that the supports of the deviation mirror (6) and of a cooling plate (7) on the rear side thereof are constructed in such a way that only small forces parallel to the plane of the mirror can arise.

5. Apparatus according to any of the preceding claims, characterised in that on the rear side of the deviation mirror (6) a cooling plate (7) is mounted releasably or direct liquid cooling is provided.

6. Apparatus according to claim 4 or 5, characterised in that in the cooling plate (7) are integrated electrical signal generators for safety functions such as thermal sensors (10).

7. Beam deflector for laser material working systems with a deviation mirror housing according to any of the preceding claims, characterised
- in that one side of the deviation mirror (6) is exposed in the upper housing portion (2),
- in that the laser beam inlet opening in the upper housing portion (2) is enlarged in a direction beyond the exposed edge of the mirror, and
- in that the deviation mirror housing is slidable in the direction of enlargement of the laser beam inlet opening and back.

8. Beam deflector according to claim 7, characterised in that the deviation mirror (6) is arranged asymmetrically in the upper housing portion (2).

9. Beam deflector according to claim 7 or 8, characterised in that on the laser beam inlet side a liquid-cooled baffle plate screen (16) which is mounted in front and adapted to the beam geometry and the exposed edge of the mirror is mounted in heat-insulated relationship on the upper housing portion (2).

10. Beam deflector according to any of claims 7 to 9, characterised in that the stroke of housing displacement is about 10 mm greater than the primary beam diameter.

11. Beam deflector according to any of claims 7 to 10, characterised in that the housing is slidable from one end position into the other end position within about 0.2 s.

## Revendications

1. Boîtier de miroir de déviation, avec un miroir de déviation (6), pour systèmes d'usinage de matériaux au laser :
- avec une partie inférieure de boîtier (1), réalisé sous forme de calotte sphérique, le centre de la calotte sphérique étant situé dans le plan du miroir,
- et avec une partie supérieure de boîtier (2), portant le miroir de déviation (6), avec une surface de tourillonnement correspondant à la calotte sphérique,
- pour lequel le miroir de déviation (6) est ajustable dans la calotte sphérique, par pivotement de la partie supérieure de boîtier (2), par rapport à la partie inférieure de boîtier (1),
caractérisé en ce que
- le tourillonnement à calotte sphérique des parties de boîtier (1, 2) se trouve dans une zone située devant la surface du miroir de déviation (6),
- en ce que les deux parties de boîtier (1, 2) sont pourvues, dans la zone du tourillonnement à calotte sphérique, d'ouvertures, placées en regard, pour le rayon laser, et
- en ce que le miroir de déviation est inséré et maintenu dans la partie supérieure de boîtier (2), facilement accessible, depuis l'extérieur du boîtier et ajusté dans le plan du miroir.

2. Dispositif selon la revendication 1, caractérisé en ce qu'entre la partie supérieure de boîtier (2) et la partie inférieure de boîtier (1) sont prévus deux vis d'ajustage (3), orientées respectivement dans la direction axiale du rayon laser et transversalement par rapport à celle-ci.

3. Dispositif selon l'une des revendications précédentes, caractérisé en ce que la position du miroir de déviation (6) par rapport à la partie supérieure de boîtier (2) est fixée au moyen de surface d'appui de miroir, ménagées pour la surface du miroir, dans la partie supérieure de boîtier (2).

4. Dispositif selon l'une des revendications précédentes, caractérisé en ce que la fixation du miroir de déviation (6) et d'une plaque de refroidissement (7) sont réalisées en face arrière du miroir de déviation, de manière que seuls peuvent se produire des efforts de faible valeur et parallèles au plan du miroir.

5. Dispositif selon l'une des revendications précédentes, caractérisé en ce qu'une plaque de refroidissement (7) est montée amovible en face arrière du miroir de déviation (6), ou bien un refroidissement direct par liquide est prévu.

6. Dispositif selon la revendication 4 ou 5, caractérisé en ce que des transducteurs de signalisation destinés aux fonctions de sécurité, tels que des thermo-sondes (10), sont intégrés dans la plaque de refroidissement (7).

7. Filtre séparateur du faisceau pour systèmes d'usinage de matériaux au laser, avec un boîtier de miroir de déviation selon l'une des revendications précédentes, caractérisé en ce qu'
- une face du miroir de déviation (6) est disposée, libre, dans la partie supérieure de boîtier (2),
- l'ouverture d'entrée de rayon laser ménagée dans la partie supérieure de boîtier (2) est agrandie en direction du bord libre du miroir, et
- en ce que le boîtier de miroir de déviation est réalisé déplaçable, dans le sens de l'augmentation de l'ouverture d'entrée de rayon laser et en sens inverse.

8. Filtre séparateur du faisceau selon la revendication 7, caractérisé en ce que le miroir de déviation (6) est disposé asymétriquement dans la partie supérieure de boîtier.

9. Filtre séparateur du faisceau selon la revendication 7 ou 8, caractérisé en ce que, du côté d'entrée du rayon laser est fixé, en amont et isolé thermiquement sur la partie supérieure de boîtier (2), un diaphragme à plaques de rebond (16), refroidi par un liquide, adapté à la géométrie du faisceau et à la bordure libre du miroir.

10. Filtre séparateur du faisceau selon l'une des revendications 7 à 9, caractérisé en ce que la course de déplacement du boîtier est supérieure d'à peu près 10 mm au diamètre du faisceau brut.

11. Filtre séparateur du faisceau selon l'une des revendications 7 à 10, caractérisé en ce que le boîtier est déplaçable, en à peu près 0,2 seconde, d'une position finale à l'autre position finale.
